# EUROPEAN PATENT SPECIFICATION

(11) **EP 3 000 853 B1**
(45) Date of publication and mention of the grant of the patent: **08.04.2020**
(21) Application number: 14186726.7
(22) Date of filing: 29.09.2014
(51) Int. Cl.: C09D 11/101, C09D 11/30, C09D 11/328

(54) **Etch-resistant inkjet inks for manufacturing conductive patterns**
Ätzfeste Tintenstrahltinten zur Herstellung von leitfähigen Strukturen
Encres pour jet d'encre résistant à l'attaque chimique pour la fabrication de motifs conducteurs

(43) Date of publication of application: 30.03.2016
(73) Proprietor: AGFA-GEVAERT, 2640 Mortsel (BE)
(72) Inventor: Torfs, Rita, 2640 Mortsel (BE); Loccufier, Johan, 2640 Mortsel (BE)
(74) Representative: Strijckers, Hans Louis P.

(56) References cited:
- EP-A1- 2 042 574
- EP-A1- 2 145 932
- EP-A2- 0 588 533
- US-A- 4 636 534
- US-A1- 2013 186 672

## Description

### Technical Field

The present invention relates to an etch-resistant inkjet ink and a method of manufacturing conductive patterns.

### Background Art

Printed circuit boards are usually made by coating a photo resist layer on a copper sheet bonded to a non-conductive substrate, applying a temporary UV mask of a negative image of a desired conductive pattern, UV exposing the photo resist layer, removing the non-exposed photo resist layer by a developer, removing unwanted copper by etching, removing the exposed photo resist layer by an alkaline stripping bath, thereby leaving only the desired conductive copper pattern present on the non-conductive substrate.

Etching is the process of using a chemical, usually a strong acid or mordant, to cut into the unprotected parts of a metal surface. The use of developer to remove the photo resist layer, often 50 µm thick or more, results in extra cost and chemical waste. Therefore, it has been investigated if the developing step could be eliminated by UV curable inkjet printing an etch-resistant inkjet ink layer on the copper sheet, which after etching is removed in flakes by an alkaline stripping bath to expose the conductive copper pattern.

US 5270368 (VIDEOJET) discloses a UV curable, etch-resistant ink for inkjet printing circuit boards comprising a resin formulation having at least two acrylate components, one of which is an aromatic acrylate having a pendant carboxyl group and one of which is an acrylated epoxy monomer or dimer, a photoinitiator and an organic carrier. The preferred organic carrier of methanol and methyl ethyl ketone is employed in a range of 40% to 90% by weight of the ink composition. These volatile organic solvents lead to latency problems of inkjet print heads making reliable inkjet printing in an industrial environment process problematic. Reducing the amount of organic solvent leads to a too high ink viscosity, because some aromatic acrylate compounds traditionally used for preparing photo resist coatings have very high viscosity. For example, the bisphenol A ethoxylated diacrylate (Photomer™ 4028) used in all the examples of US 5270368 (VIDEOJET) has a viscosity of 800 to 1200 mPa.s at 25°C. These aromatic acrylate compounds are essential for having a good balance in adhesion so that the printed ink layer is etch resistant yet easily removable after etching, especially since many different etching conditions and etchants are used in industry.

WO 2004/106437 A (AVECIA) discloses a process for etching a metal or alloy surface which comprises applying an etch-resistant ink by inkjet printing to selected areas of the metal or alloy, exposing the etch-resistant ink to actinic radiation and/or particle beam radiation to effect polymerisation, optionally thermally treating the etch-resistant ink and then removing the exposed metal or alloy by a chemical etching process wherein the etch-resistant ink is substantially solvent-free.

Another problem is the flake formation in the alkaline stripping bath. Stripping solutions are normally alkaline metal hydroxides, such as sodium or potassium hydroxide, or based on amines such as mono or tri ethanolamine and tetra methyl ammonium hydroxide. The stripping solution breaks the polymer chain at the cross-linking point of the three dimensional structure, which is formed during the polymerization of the resist and before the bond between the resist and the copper surface is broken. In order to extend the working lifetime of the stripping solution, it is necessary to filter the solution to remove the stripped flakes of resist. If the flake size is too large it tends to adhere to stripping equipment disturbing the smooth running of the manufacturing process. If the flakes are too small they pass through the filter and return in the stripping bath. After a while these small flakes accumulate and also start to disturb the smooth running of the manufacturing process. These very small flakes tend to block the nozzles of the sprays of the stripping line. The stripped flake size depends on the type of stripping solution, the concentration of the stripping solution, the temperature of the stripping solution and the design of the stripping equipment, etc. This multitude of influencing factors makes it very difficult to control the flake size to a desired size.

Hence, there remains a need for improved low viscous radiation curable inkjet inks suitable for reliable inkjet printing in an industrial etching process applicable to a wide range of etchants and etching conditions and exhibiting no problems with stripping and flake formation.

### Summary of invention

In order to overcome the problems described above, preferred embodiments of the present invention provide a UV curable inkjet ink as claimed in claim 1.

It was found that a very specific composition of UV curable inkjet ink was capable of combining all the requirements of cure speed, etch resistance, strippability and flake formation.

Further objects of the invention will become apparent from the description hereinafter

### Description of embodiments

### Definitions

The term "monofunctional" means that the monomer or oligomer includes one free radical polymerizable group.

The term "polyfunctional" means that the monomer or oligomer includes two or more free radical polymerizable groups. For example, a polyfunctional acrylate contains two, three or more acrylate groups as free radical polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₁ to C₆-alkenyl group.

Unless otherwise specified a substituted or unsubstituted alkynyl group is preferably a C₁ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -CI, -Br, -I, -OH, -SH, -

CN and -NO₂.

### UV Curable Inkjet Inks

A UV curable inkjet ink according to a preferred embodiment of the invention comprises a polymerizable composition, wherein at least 80 wt%, preferably at least 90 wt% and most preferably 100 wt% of the polymerizable composition consists of:
a) 15.0 to 70.0 wt% of an acryl amide;
b) 20.0 to 75.0 wt% of a polyfunctional acrylate; and
c) 1.0 to 15.0 wt% of a monofunctional (meth)acrylate containing a carboxylic acid group, a phosphoric acid group or a phosphonic acid group; with all weight percentages (wt%) based on the total weight of the polymerizable composition.

The UV curable inkjet inks may also be cationically curable, but are preferably free radical UV curable inkjet inks. The UV curable inkjet inks can be cured by e-beam, but are preferably cured by UV light.

The UV curable ink may be a colourless inkjet ink, but preferably it contains at least one colorant. The advantage is that the printed ink pattern is clearly visible which allows orienting the metal surface during handling and to visually inspect the quality of a PCB manufacturing process by the naked eye. The colorant may be a dye or a pigment. If the colorant is a pigment preferably a dispersant is present, more preferably a polymeric dispersant. The pigmented curable ink may contain a dispersion synergist to improve the dispersion quality and stability of the ink. However, most preferably the colorant is a dye that survives the UV curing step in the inkjet printing process. A dye causes unlike pigments and dispersants usually no sludge in the etching and stripping solutions.

For reliable industrial inkjet printing, the viscosity of the UV curable inkjet inks is preferably no more than 20 mPa.s at 45°C, more preferably between 1 and 18 mPa.s at 45°C, and most preferably between 4 and 14 mPa.s at 45°C.

For good image quality and adhesion, the surface tension of the UV curable inkjet inks is preferably in the range of 18 mN/m to 70 mN/m at 25°C, more preferably in the range of about 20 mN/m to about 40 mN/m at 25°C.

### Methods of Inkjet Printing and Manufacturing Conductive Patterns

A method of inkjet printing according to a preferred embodiment of the invention includes the steps of a) forming a protected area on a metal surface by printing and curing a UV curable inkjet ink on the metal surface; b) removing metal from the unprotected area of the metal surface by etching; and c) removing at least partially the cured UV curable inkjet ink from the protected area of the metal surface; wherein the UV curable inkjet ink comprises a polymerizable composition, wherein at least 80 wt% of the polymerizable composition consists of:
a) 15.0 to 70.0 wt% of an acryl amide;
b) 20.0 to 75.0 wt% of a polyfunctional acrylate; and
c) 1.0 to 15.0 wt% of a monofunctional (meth)acrylate containing a carboxylic acid group, a phosphoric acid group or a phosphonic acid group; with all weight percentages (wt%) based on the total weight of the polymerizable composition.

In one preferred embodiment, the inkjet printing method is used for manufacturing a conductive pattern. In this case, the metal surface is preferably a metal foil, most preferably a copper foil, attached to a substrate. There is no real limitation on the type of substrate bonded to the metal sheet as long as it is non-conductive. The substrates may be made of a ceramic, glass or plastics, such as polyimides. The metal sheet, usually having a thickness between 9 and 105 µm, bonded to the substrate is preferably a copper sheet, because copper has a high conductivity and is relatively cheap.

In another preferred embodiment, the inkjet printing method is used for manufacturing a decorative etched metal panel. In this case, preferably a solid metal panel is used. However, also a metal foil attached to a substrate may be used. There is no real limitation on the type of substrate bonded to the metal foil. The substrates may be made of a ceramic, glass or plastics, or even a second (cheaper) metal plate. The metal may also be an alloy.

In both cases of conductive and decorative patterns, the etched metal or alloy substrate printed with a UV curable inkjet ink preferably contains copper.

There is no limitation on the nature of the metal surface. The metal surfaces preferably consist of copper, aluminium, nickel, iron, tin, titanium or zinc, but may be also alloys including these metals. In a very preferred embodiment, the metal surface is made of copper. Copper has a high electrical conductivity and is a relatively cheap metal, making it very suitable for making printed circuit boards.

The metal surface may be self-supporting or may be present on a support. The support can be a non-flexible support as conventionally used in the production of PCBs, but may be also a flexible substrate made of e.g. polyethylene terephthalate or polyimide.

Self supporting metal surfaces are generally used when a decorative metal panel is made. Such a decorative metal panel may serve a purpose other than being purely decorative, such as providing information. For example, an aluminium name plate wherein the etch resistant UV curable inkjet ink was printed as information, such as a name of a person or a company, and then removed to result in a glossy shiny name on a mat etched background, is also considered a decorative metal panel including a decorative element. Etching causes a change in optical properties of a metal surface, such as a change of gloss. After removal of the cured UV curable inkjet ink from the metal surface an aesthetic effect is created between the etched and the non-etched metal surface.

In another embodiment of a decorative metal panel, the metal surface is not self-supporting and when removed by etching exposes the colour of or the information on the support.

In a preferred embodiment of the inkjet printing method, the metal surface is cleaned before printing the UV curable inkjet ink. This is especially desirable when the metal surface is handled by hand and no gloves are worn. The cleaning removes dust particles and grease which can interfere in the adhesion of the UV curable inkjet ink to the metal surface.

Etching of a metal surface, as in step b) of the inkjet printing method, is performed by using an etchant. The etchant is preferably an aqueous solution having a pH < 3 or wherein 8 < pH < 10.

In a preferred embodiment, the etchant is an acid aqueous solution having a pH of less than 2. The acid etchant preferably includes at least one acid selected from the group consisting of nitric acid, picric acid, hydrochloric acid, hydrofluoric acid and sulphuric acid.

Preferred etchants known in the art include Kalling's N°2, ASTM N° 30, Kellers Etch, Klemm's Reagent, Kroll's Reagent, Marble's Reagent, Murakami's Reagent, Picral and Vilella's Reagent.

In another preferred embodiment, the etchant is an alkaline aqueous solution having a pH of no more than 9. The alkaline etchant preferably includes at least one base selected from the group consisting of ammonia or ammonium hydroxide, potassium hydroxide and sodium hydroxide.

The etchant may also contain a metal salt such as copper dichloride, copper sulphate, potassium ferricyanide and iron trichloride.

Etching is preferably performed in a time frame of seconds to a few minutes, more preferably 5 to 150 seconds. Etching is preferably performed at a temperature between 35 and 50°C.

Etching is preferably followed by rinsing with water to remove any residual etchant.

After etching, the cured UV curable inkjet ink must at least partially be removed from the metal surface, so that e.g. electric or electronic devices can make contact with the remaining metal surface (conductive pattern) or that the decorative feature of an etched metal panel becomes fully visible. For example, an electronic component such as a transistor must be able to make electrical contacts with the conductive (copper) pattern on the printed circuit board. In a preferred embodiment, the cured UV curable inkjet ink is completely removed from the metal surface.

In a preferred embodiment, the cured UV curable inkjet ink is removed from the protected area in step c) by an alkaline stripping bath. Such an alkaline stripping bath is usually an aqueous solution with a pH > 10.

In another embodiment, the cured UV curable inkjet ink is removed from the protected area in step c) by dry delamination. This technique of "dry stripping" is currently unknown in the art of manufacturing printed circuit boards and introduces several ecological and economical advantages in the manufacturing process. Dry stripping not only eliminates the need of a corrosive alkaline stripping bath and its inherent liquid waste, but also allows for a higher throughput. Dry stripping can be implemented, for example, by using an adhesive foil and a roll-to-roll laminator-delaminator. The adhesive foil is first laminated with its adhesive side onto the cured UV curable inkjet ink present on the metal surface and subsequently delaminated thereby removing the cured UV curable inkjet ink from the metal surface. Delamination by a roll-to-roll laminator-delaminator can be performed in seconds, while alkaline stripping can take minutes.

### Acryl Amides

The UV curable inkjet ink according to the present invention includes at least 15.0 to 70.0 wt%, preferably at least 20.0 to 65.0 wt% and most preferably at least 30.0 to 60.0 wt% of an acryl amide in the polymerizable composition, with all weight percentages (wt%) based on the total weight of the polymerizable composition.

A single acryl amide or a mixture of acryl amides may be used.

Preferred acryl amides are disclosed in Table 1.

**Table 1**

| | |
|---|---|
| AA-1 | 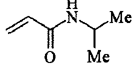 |
| AA-2 | 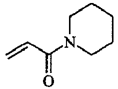 |
| AA-3 | 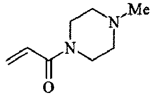 |
| AA-4 | 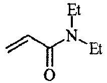 |
| AA-5 | 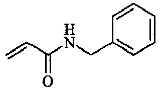 |
| AA-6 | 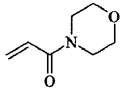 |
| AA-7 | 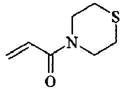 |
| AA-8 | 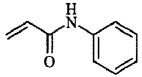 |
| AA-9 | 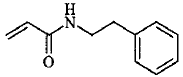 |
| AA-10 | 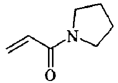 |

In a preferred embodiment of the UV curable inkjet ink, the acryl amide is a cyclic acryl amide.

In the most preferred embodiment of the UV curable inkjet ink, the acryl amide is acryloyl morpholine.

### Polyfunctional Acrylates

The UV curable inkjet ink according to the present invention includes at least 20.0 to 75.0 wt%, preferably at least 30.0 to 65.0 wt% and most preferably at least 40.0 to 55.0 wt% of a polyfunctional acrylate in the polymerizable composition, with all weight percentages (wt%) based on the total weight of the polymerizable composition.

A single polyfunctional acrylate or a mixture of polyfunctional acrylates may be used.

In a preferred embodiment, the polyfunctional acrylate is selected from the group consisting of dipropylene glycol diacrylate, neopentylglycol diacrylate , neopentylglycol (2x propoxylated) diacrylate, penta erythritol tetraacrylate, 1,6-hexanediol diacrylate, trimethylolpropane triacrylate, ethoxylated trimethylolpropane triacrylate, tripropylene glycol diacrylate, ditrimethyloylpropane tetraacrylate, ethoxylated pentaerythritol tetraacrylate, and polyethyleneglycol diacrylate.

In the most preferred embodiment of the UV curable inkjet ink, the polyfunctional acrylate includes a neopentylglycol hydroxy pivalate diacrylate.

### Acid Group Containing (Meth)acrylates

The UV curable inkjet ink according to the present invention includes at least 1 to 15 wt%, preferably at least 2 to 12 wt% and most preferably at least 4 to 8 wt% of a (meth)acrylate containing a carboxylic acid group, a phosphoric acid group or a phosphonic acid group in the polymerizable composition, with all weight percentages (wt%) based on the total weight of the polymerizable composition.

Suitable examples of the carboxylic acid group-containing monofunctional (meth)acrylate include a compound represented by the Formula (I): 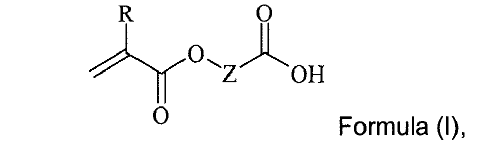 wherein, R represents a hydrogen atom or a methyl group, preferably a hydrogen atom; and Z represents a divalent organic group.

Preferred examples of Z are * -(CH2)n-* [wherein n represents an integer of 2 to 12];* -CH2-CH2-O-CO-Z'-* [wherein Z' represents a divalent organic group selected from the following]; * -C6H4-*; * -C6H4-(CH2)n-* [wherein n represents an integer of 1 to 12]; * -(CH2)n-C6H4-* [wherein n represents an integer of 1 to 12]; and * -(CH2)n-O-C6H4-* [wherein n represents an integer of 1 to 12]; and wherein * represents a linking site.

Preferred examples of the (meth)acrylate containing a carboxylic acid group are discloses in Table 2.

**Table 2**

| | |
|---|---|
| MC-1 | 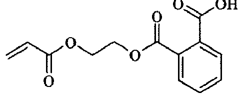 |
| MC-2 | 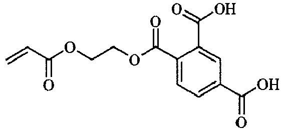 |
| MC-3 | 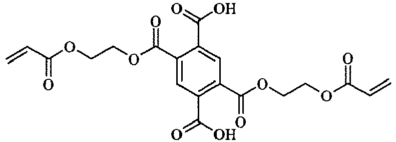 |
| MC-4 | 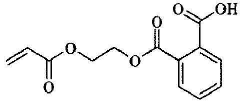 |

Preferred examples of the (meth)acrylate containing a phosphoric acid group or a phosphonic acid group include 2-(methacryloyloxy)ethyl phosphate, hydroxyethyl methacrylate phosphate, bis-(2-methacryloyl oxyethyl) phosphate.

Preferred examples of the (meth)acrylate containing a phosphoric acid group are compounds according to Formula P-1 or P-2: 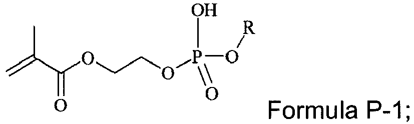 and 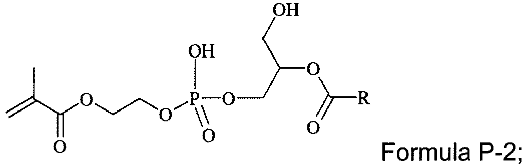 wherein R represents CₙH₂ₙ₊₁ with n representing an integer between 6 and 18.

Preferred examples of the (meth)acrylate containing a phosphoric acid group are disclosed in Table 3.

**Table 3**

| | |
|---|---|
| MP-1 | 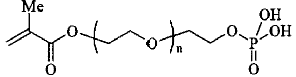 |
| | with n = 2 to 8 |
| MP-2 | 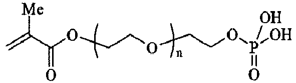 |
| | with n = 2 to 8 |
| MP-3 | 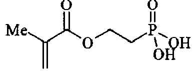 |

In a particularly preferred embodiment of the UV curable inkjet ink, the (meth)acrylate containing a carboxylic acid group, a phosphoric acid group, or a phosphonic acid group is selected from the group consisting of: 2-carboxyethyl acrylate, 2-acryloyl ethyl succinate, and 2-hydroxyethyl methacrylate phosphate.

### Other Polymerizable Compounds

Other polymerizable compounds than the ones above may be present in the UV curable inkjet ink in an amount of 0 to 20 wt%, more preferably up to 15 wt% and most preferably in an amount of up to 10 wt% with all weight percentages (wt%) based on the total weight of the polymerizable composition.

The other polymerizable compounds preferably consist of one or more monomers, oligomers and/or prepolymers. These monomers, oligomers and/or prepolymers may possess different degrees of functionality, A mixture including combinations of mono-, di-, tri-and higher functionality monomers, oligomers and/or prepolymers may be used..

Particularly preferred other monomers and oligomers are those listed in [0106] to [0115] in EP 1911814 A (AGFA).

### Colorants

The UV curable inkjet may be a substantially colourless inkjet ink, but preferably the UV curable inkjet ink includes at least one colorant. The colorant makes the temporary mask clearly visible to the manufacturer of conductive patters, allowing a visual inspection of quality.

The colorant in the cured inkjet ink pattern on the metal sheet and the UV curable inkjet ink may be a pigment or a dye, but is preferably a dye that is not bleached by the UV curing step during the inkjet printing process of the UV curable inkjet ink.

The pigments may be black, white, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH , 2004. ISBN 3527305769.

Suitable pigments are disclosed in paragraphs [0128] to [0138] of WO 2008/074548 (AGFA GRAPHICS) .

Pigment particles in inkjet inks should be sufficiently small to permit free flow of the ink through the inkjet-printing device, especially at the ejecting nozzles. It is also desirable to use small particles for maximum colour strength and to slow down sedimentation. Most preferably, the average pigment particle size is no larger than 150 nm. The average particle size of pigment particles is preferably determined with a Brookhaven Instruments Particle Sizer BI90plus based upon the principle of dynamic light scattering.

Generally dyes exhibit a higher light fading than pigments, but cause no problems on jettability. It was found that anthraquinone dyes exhibit only minor light fading under the normal UV curing conditions used in UV curable inkjet printing.

In a preferred embodiment, the colorant in the UV curable inkjet ink is an anthraquinone dye, such as Macrolex™ Blue 3R (CASRN 325781-98-4) from LANXESS.

Other preferred dyes include crystal violet and a copper phthalocyanine dye.

In a preferred embodiment, the colorant is present in an amount of 0.5 to 6.0 wt%, more preferably 1.0 to 2.5 wt%, based on the total weight of the UV curable inkjet ink.

### Polymeric Dispersants

If the colorant in the UV curable inkjet ink is a pigment, then the UV curable inkjet ink preferably contains a dispersant, more preferably a polymeric dispersant, for dispersing the pigment.

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077], in EP 1911814A (AGFA).

Commercial examples of polymeric dispersants are the following:
- DISPERBYK™ dispersants available from BYK CHEMIE GMBH;
- SOLSPERSE™ dispersants available from NOVEON;
- TEGO™ DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from CIBA SPECIALTY CHEMICALS INC;
- DISPONER™ dispersants from DEUCHEM; and
- JONCRYL™ dispersants from JOHNSON POLYMER.

### Photoinitiators and Photoinitiating Systems

The UV curable inkjet ink contains at least one photoinitiator, but may contain a photoinitiating system including a plurality of photoinitiators and/or co-initiators.

The photoinitiator in the UV curable inkjet ink is preferably a free radical initiator, more specifically a Norrish type I initiator or a Norrish type II initiator. A free radical photoinitiator is a chemical compound that initiates polymerization of monomers and oligomers when exposed to actinic radiation by the formation of a free radical. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

Suitable photoinitiators are disclosed in CRIVELLO, J.V., et al. Photoinitiators for Free Radical Cationic and Anionic Photopolymerization. 2nd edition. Edited by BRADLEY, G.. London, UK: John Wiley and Sons Ltd, 1998. p.287-294.

Specific examples of photoinitiators may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl) butan-1-one, benzyl dimethylketal, bis (2,6- dimethylbenzoyl)-2,4,4-trimethylpentylphosphine oxide, 2,4,6 trimethylbenzoyldiphenylphosphine oxide, 2,4,6-trimethoxybenzoyldiphenylphosphine oxide, 2-methyl-1- [4-(methylthio) phenyl] -2-morpholinopropan-1-one, 2,2-dimethoxy-1, 2-diphenylethan-1-one or 5,7-diiodo-3- butoxy-6-fluorone.

Suitable commercial photoinitiators include Irgacure™ 184, Irgacure™ 500, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 2959, Darocur™ 4265 and Darocur™ ITX available from CIBA SPECIALTY CHEMICALS, Lucerin™ TPO available from BASF AG, Esacure™ KT046, Esacure™ KIP150, Esacure™ KT37 and Esacure™ EDB available from LAMBERTI, H-Nu™ 470 and H-Nu™ 470X available from SPECTRA GROUP Ltd..

For safety reasons during manufacturing of a conductive pattern, the photoinitiator is preferably a so-called diffusion hindered photoinitiator. A diffusion hindered photoinitiator is a photoinitiator which exhibits a much lower mobility in a cured ink layer than a monofunctional photoinitiator, such as benzophenone. Several methods can be used to lower the mobility of the photoinitiator. One way is to increase the molecular weight of the photoinitiators so that the diffusion speed is reduced, e.g. polymeric photoinitiators. Another way is to increase its reactivity so that it is built into the polymerizing network, e.g. multifunctional photoinitiators (having 2, 3 or more photoinitiating groups) and polymerizable photoinitiators.

The diffusion hindered photoinitiator for the UV curable inkjet ink is preferably selected from the group consisting of non-polymeric multifunctional photoinitiators, oligomeric or polymeric photoinitiators and polymerizable photoinitiators. Most preferably the diffusion hindered photoinitiator is a polymerizable initiator or a polymeric photoinitiator.

A preferred diffusion hindered photoinitiator contains one or more photoinitiating functional groups derived from a Norrish type I-photoinitiator selected from the group consisting of benzoinethers, benzil ketals, α,α-dialkoxyacetophenones, α-hydroxyalkylphenones, α-aminoalkylphenones, acylphosphine oxides, acylphosphine sulphides, α-haloketones, α-halosulfones and phenylglyoxalates.

A preferred diffusion hindered photoinitiator contains one or more photoinitiating functional groups derived from a Norrish type II-initiator selected from the group consisting of benzophenones, thioxanthones, 1,2-diketones and anthraquinones.

Suitable diffusion hindered photoinitiators are also those disclosed in EP 2065362 A (AGFA) in paragraphs [0074] and [0075] for difunctional and multifunctional photoinitiators, in paragraphs [0077] to [0080] for polymeric photoinitiators and in paragraphs [0081] to [0083] for polymerizable photoinitiators.

A preferred amount of photoinitiator is 0.1 - 20 wt%, more preferably 2 - 15 wt%, and most preferably 3 - 10 wt% of the total weight of the UV curable inkjet ink.

In order to increase the photosensitivity further, the UV curable inkjet ink may additionally contain co-initiators. Suitable examples of co-initiators can be categorized in three groups: 1) tertiary aliphatic amines such as methyldiethanolamine, dimethylethanolamine, triethanolamine, triethylamine and N-methylmorpholine; (2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and (3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate). The preferred co-initiators are aminobenzoates.

When one or more co-initiators are included into the UV curable inkjet ink, preferably these co-initiators are diffusion hindered for safety reasons.

A diffusion hindered co-initiator is preferably selected from the group consisting of non-polymeric di- or multifunctional co-initiators, oligomeric or polymeric co-initiators and polymerizable co-initiators. More preferably the diffusion hindered co-initiator is selected from the group consisting of polymeric co-initiators and polymerizable co-initiators. Most preferably the diffusion hindered co-initiator is a polymerizable co-initiator having at least one (meth)acrylate group, more preferably having at least one acrylate group.

The UV curable inkjet ink preferably includes a polymerizable or polymeric tertiary amine co-initiator.

Preferred diffusion hindered co-initiators are the polymerizable co-initiators disclosed in EP 2053101 A (AGFA) in paragraphs [0088] and [0097].

The UV curable inkjet inks preferably includes the (diffusion hindered) co-initiator in an amount of 0.1 to 20 wt%, more preferably in an amount of 0.5 to 15 wt%, most preferably in an amount of 1 to 10 wt% of the total weight of the UV curable inkjet ink.

### Polymerization Inhibitors

The UV curable inkjet ink may contain at least one inhibitor for improving the thermal stability of the ink.

Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol, 2,6-di-tert.butyl-4-methylphenol (=BHT) may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™18 and Genorad™ 20 from Rahn AG; Irgastab™UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

The inhibitor is preferably a polymerizable inhibitor.

Since excessive addition of these polymerization inhibitors may lower the curing speed, it is preferred that the amount capable of preventing polymerization is determined prior to blending. The amount of a polymerization inhibitor is preferably lower than 5 wt%, more preferably lower than 3 wt% of the total UV curable inkjet ink.

### Surfactants

The UV curable inkjet ink may contain at least one surfactant, but preferably no surfactant is present. If no surfactant is present, the UV curable inkjet ink does not spread well on the metal sheet allowing the generation of thin conductive lines.

The surfactant can be anionic, cationic, non-ionic, or zwitter-ionic and is usually added in a total quantity less than 1wt% based on the total weight of the UV curable inkjet ink.

Suitable surfactants include fluorinated surfactants, fatty acid salts, ester salts of a higher alcohol, alkylbenzene sulfonate salts, sulfosuccinate ester salts and phosphate ester salts of a higher alcohol (for example, sodium dodecylbenzenesulfonate and sodium dioctylsulfosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.).

Preferred surfactants are selected from fluoric surfactants (such as fluorinated hydrocarbons) and silicone surfactants. The silicone surfactants are preferably siloxanes and can be alkoxylated, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferably the surfactant is present in the UV curable inkjet ink in an amount of 0 to 0.05 wt% based on the total weight of the UV curable inkjet ink.

### Inkjet Printing Devices

The UV curable inkjet ink may be jetted by one or more print heads ejecting small droplets in a controlled manner through nozzles onto a substrate, which is moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head. However the inkjet printing method according to the present invention is not restricted to piezoelectric inkjet printing. Other inkjet print heads can be used and include various types, such as a continuous type.

The inkjet print head normally scans back and forth in a transversal direction across the moving ink-receiver surface. Often the inkjet print head does not print on the way back. Bi-directional printing is preferred for obtaining a high areal throughput. Another preferred printing method is by a "single pass printing process", which can be performed by using page wide inkjet print heads or multiple staggered inkjet print heads which cover the entire width of the ink-receiver surface. In a single pass printing process the inkjet print heads usually remain stationary and the substrate surface is transported under the inkjet print heads.

### Curing Devices

The UV curable inkjet ink can be cured by exposing them to actinic radiation, preferably by ultraviolet radiation.

In inkjet printing, the curing means may be arranged in combination with the print head of the inkjet printer, travelling therewith so that the curable liquid is exposed to curing radiation very shortly after been jetted.

In such an arrangement it can be difficult to provide a small enough radiation source connected to and travelling with the print head, such as LED. Therefore, a static fixed radiation source may be employed, e.g. a source of curing UV-light, connected to the radiation source by means of flexible radiation conductive means such as a fibre optic bundle or an internally reflective flexible tube.

Alternatively, the actinic radiation may be supplied from a fixed source to the radiation head by an arrangement of mirrors including a mirror upon the radiation head.

The source of radiation may also be an elongated radiation source extending transversely across the substrate to be cured. It may be adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:
- UV-A: 400 nm to 320 nm
- UV-B: 320 nm to 290 nm
- UV-C: 290 nm to 100 nm.

In a preferred embodiment, the UV curable inkjet ink is cured by UV LEDs. The inkjet printing device preferably contains one or more UV LEDs preferably with a wavelength larger than 360 nm, preferably one or more UV LEDs with a wavelength larger than 380 nm, and most preferably UV LEDs with a wavelength of about 395 nm.

Furthermore, it is possible to cure the ink pattern using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

For facilitating curing, the inkjet printing device often includes one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### EXAMPLES

### Materials

All materials used in the following examples were readily available from standard sources such as ALDRICH CHEMICAL Co. (Belgium) and ACROS (Belgium) unless otherwise specified. The water used was deionized water.

**Dye-1** is a blue anthraquinone dye available as Macrolex™ Blue 3R from LANXESS.

ITX is Darocur™ ITX is an isomeric mixture of 2- and 4-isopropylthioxanthone from BASF.

**EPD** is ethyl 4-dimethyaminobenzoate available as Genocure™ EPD from RAHN.

**TPO** is 2,4,6-trimethylbenzoyl-diphenyl-phosphineoxide available as **Darocur™ TPO** is from BASF.

**BAPO** is phenyl bis(2,4,6-trimethylbenzoyl)-phosphine oxide available from BASF.

**Irgacure™ 907** is 2-methyl-1-[4-(methylthio)phenyl]-2-morpholino-propan-1-one, a photoinitiator available from BASF.

**INHIB** is a mixture forming a polymerization inhibitor having a composition:

**Table 4**

| **Component** | **wt%** |
|---|---|
| **DPGDA** | 82.4 |
| **p-methoxyphenol** | 4.0 |
| **2,6-di-tert-butyl-4-methylphenol** | 10.0 |
| **Cupferron™ AL** | 3.6 |

**Cupferron™ AL** is aluminum N-nitrosophenylhydroxylamine from WAKO CHEMICALS LTD.

**Macrolex™ Blue 3R** is a blue anthraquinone dye from LANXESS.

**DPGDA** is dipropylene glycol diacrylate available as Sartomer™ SR508 from SARTOMER.

**2-HEA** is 2-hydroxy ethyl acrylate from ALDRICH.

**MADAME** is N,N-dimethyl 2-aminoethyl methacrylate available as Norsocryl™ MADAME from ARKEMA France.

**EOEOEA** is ethoxyethoxy ethylacrylate available as Sartomer™ SR256 from SARTOMER.

**ACMO** is acryloyl morpholine available from RAHN.

**VEEA** or 2-(2-vinyloxy-ethoxy)-ethyl acrylate was supplied by Nippon Shokubai.

**IDA** is isodecylacrylate available as Sartomer™ SR395 from SARTOMER.

**SR606A** is a neopentylglycol hydroxyl pivalate diacrylate available as Sartomer™ SR606A from SARTOMER.

**HDDA** is 1,6-hexanediol diacrylate available as Sartomer™ SR238 from SARTOMER.

**TMPTA** is trimethylolpropane trimethacrylate available as Sartomer™ SR350 from SARTOMER.

**NPGDA** is neopentylglycol (2x propoxylated) diacrylate available as Sartomer™ SR9003 from SARTOMER

**PETA** is penta erythritol tetraacrylate available as Sartomer 295 from Sartomer.

**CEA** is 2-carboxyethyl acrylate from ALDRICH.

**SR9054** is 2-hydroxyethyl methacrylate phosphate available as Sartomer™ SR9054 from SARTOMER.

### Measurement Methods

### 1. Cure speed

After printing and curing on the copper plates, the inkjetted layer was evaluated by touch of a finger. Evaluation was made in accordance with a criterion described in Table 5.

**Table 5**

| **Evaluation** | **Criterion** |
|---|---|
| OK | Layer feels not tacky |
| Not OK | Layer feels tacky or even wet |

### 2. Etch Resistance

The etch resistance was evaluated by rubbing a cotton bud over the layer immediately after etching and rinsing. Evaluation was made in accordance with a criterion described in Table 6.

**Table 6**

| **Evaluation** | **Criterion** |
|---|---|
| OK | Layer not damaged |
| Not OK | Layer damaged |

### 3. Strippability and Flakes

A punch of an etched and dried sample was submitted into a beaker containing 6.25% NaOH-solution at 50°C and stirred. The time of release of the inkjetted layer from the copper surface, i.e. the release time, was measured. Evaluation was made in accordance with a criterion described in Table 7.

**Table 7**

| **Evaluation** | **Criterion** |
|---|---|
| OK | Release time of less than 5 minutes |
| Moderate | Release time of 5 to 10 minutes |
| Not OK | Release time of more than 10 minutes |

Once the release of the inkjetted layer started, the formation of flakes is observed. Evaluation was made in accordance with a criterion described in Table 8.

**Table 8**

| **Evaluation** | **Criterion** |
|---|---|
| OK | Flake formation within 5 minutes |
| Moderate | Flake formation within 8 minutes |
| Not OK | No break-down of the inkjetted layer within 20 minutes |

### 4. Viscosity

The viscosity of the formulations was measured at 45°C using a "Robotic Viscometer Type VISCObot" from CAMBRIDGE APPLIED SYSTEMS.

For industrial inkjet printing, the viscosity is preferably between 3.0 and 20 mPa.s at 45°C. More preferably the viscosity is less than 15 mPa.s at 45°C.

### EXAMPLE 1

This example illustrates the manufacturing of conductive patterns with UV curable inkjet inks in accordance with the invention.

### Preparation of the UV Curable Inkjet Inks

The comparative UV curable inkjet ink COMP-1 to COMP-11 and the inventive UV curable ink INV-1 to INV-16 were prepared according to a composition of Type A or B in Table 9. The weight percentages (wt%) were all based on the total weight of the UV curable inkjet ink.

**Table 9**

| **Components** | **wt% in the inkjet ink** | |
|---|---|---|
| | **Type A** | **Type B** |
| **Dye-1** | 1.00 | 1.75 |
| **Polymerizable composition according to** Table 4 | 86.00 | 82.25 |
| **ITX** | 4.00 | 5.00 |
| **EPD** | 4.00 | --- |
| **TPO** | 4.00 | 2.00 |
| **BAPO** | --- | 3.00 |
| **Irgacure™ 907** | --- | 5.00 |
| **INHIB** | 1.00 | 1.00 |

The amount and type of monomers used in the polymerizable composition of the inkjet inks are shown in Table 10. The weight percentages (wt%) in Table 4 were all based on the total weight of the polymerizable composition. The viscosity was measured and is shown in Table 11.

**Table 10**

| **Inkjet Ink** | | **Polymerizable Composition for** Table 9 | | | | | |
|---|---|---|---|---|---|---|---|
| **Sample** | **Type** | **Acryl Amide** | **wt%** | **Polyfunctional acrylate** | **wt%** | **Acid acrylate** | **wt%** |
| **COMP-1** | **A** | 2-HEA | 47.7 | SR606A | 46.5 | CEA | 5.8 |
| **COMP-2** | **A** | MADAME | 47.7 | SR606A | 46.5 | CEA | 5.8 |
| **COMP-3** | **A** | EOEOEA | 47.7 | SR606A | 46.5 | CEA | 5.8 |
| **COMP-4** | **A** | 2-HEA | 47.7 | DPGDA | 46.5 | CEA | 5.8 |
| **COMP-5** | **A** | MADAME | 47.7 | DPGDA | 46.5 | CEA | 5.8 |
| **COMP-6** | **A** | EOEOEA | 47.7 | DPGDA | 46.5 | CEA | 5.8 |
| **COMP-7** | **A** | ACMO | 53.5 | SR606A | 46.5 | CEA | 0.0 |
| **COMP-8** | **B** | VEEA | 48.9 | SR606A | 45.0 | CEA | 6.1 |
| **COMP-9** | **B** | IDA | 48.9 | SR606A | 45.0 | CEA | 6.1 |
| **COMP-10** | **B** | ACMO | 8.8 | SR606A | 85.1 | CEA | 6.1 |
| **COMP-11** | **A** | ACMO | 30.2 | SR606A | 46.5 | SR9054 | 23.3 |
| **INV-1** | **A** | ACMO | 47.7 | SR606A | 46.5 | CEA | 5.8 |
| **INV-2** | **A** | ACMO | 53.5 | SR606A | 40.7 | CEA | 5.8 |
| **INV-3** | **A** | ACMO | 59.3 | SR606A | 34.9 | CEA | 5.8 |
| **INV-4** | **A** | ACMO | 65.1 | SR606A | 29.1 | CEA | 5.8 |
| **INV-5** | **A** | ACMO | 50.6 | SR606A | 46.5 | CEA | 2.9 |
| **INV-6** | **A** | ACMO | 52.3 | SR606A | 46.5 | CEA | 1.2 |
| **INV-7** | **A** | ACMO | 47.7 | DPGDA | 46.5 | CEA | 5.8 |
| **INV-8** | **A** | ACMO | 47.7 | HDDA | 46.5 | CEA | 5.8 |
| **INV-9** | **A** | ACMO | 47.7 | NPGDA | 46.5 | CEA | 5.8 |
| **INV-10** | **A** | ACMO | 47.7 | TMPTA | 46.5 | CEA | 5.8 |
| **INV-11** | **A** | ACMO | 47.7 | PETA | 46.5 | CEA | 5.8 |
| **INV-12** | **B** | ACMO | 33.1 | SR606A | 60.8 | CEA | 6.1 |
| **INV-13** | **B** | ACMO | 21.0 | SR606A | 72.9 | CEA | 6.1 |
| **INV-14** | **A** | ACMO | 41.9 | SR606A | 46.5 | CEA | 11.6 |
| **INV-15** | **A** | ACMO | 47.7 | SR606A | 46.5 | SR9054 | 5.8 |
| **INV-16** | **A** | ACMO | 41.9 | SR606A | 46.5 | SR9054 | 11.6 |

### Evaluation and Results

Isola™ IS400 copper plates having a 35µm copper foil (available from CCI Eurolam were cleaned for 5 seconds at 25 °C with a solution called Mecbrite™ CA-95 from MEC Europe, which has pH < 1 and contained H₂SO₄, H₂O₂ and Cu²⁺. During this operation a thin top layer of Cu (0.3 - 0.5 µm) was removed. The plates were then rinsed with a water jet for 90 seconds.

A pattern of the UV curable inkjet inks COMP-1 to COMP-11 and INV-1 to INV-16 was printed unidirectional by means of an Anapurna™ M inkjet printer equipped with Konica Minolta 512 print heads at 14pL drop volume in 8 passes (1440x720 dpi) and cured by means of an Fe doped Hg lamp with an output of 550 mJ/cm². An evaluation for cure speed was made, the result is shown in Table 11.

The plates were subjected to an acidic etch bath ("Mega" acid etchant obtained from Mega Electronics, pH 2, contains FeCl₃) for 115 seconds at 35 °C. The plates were subsequently rinsed for 90 seconds with water and dried. An evaluation of the etch resistance was then made as shown in Table 11. The copper plates having their inkjet ink layer removed during etched could naturally not be evaluated for strippability and flake formation (in Table 11 marked as not applicable: NA).

**Table 11**

| **Inkjet Ink** | **Viscosity (mPa.s)** | **Cure Speed** | **Etch Resistance** | **Strippability** | **Flakes** |
|---|---|---|---|---|---|
| **COMP-1** | 6 | OK | Not OK | NA | NA |
| **COMP-2** | 4 | Not OK | OK | OK | OK |
| **COMP-3** | 5 | OK | Not OK | NA | NA |
| **COMP-4** | 5 | OK | Not OK | NA | NA |
| **COMP-5** | 3 | Not OK | OK | OK | OK |
| **COMP-6** | 4 | OK | Not OK | NA | NA |
| **COMP-7** | 8 | OK | OK | Not OK | OK |
| **COMP-8** | 7 | OK | OK | Not OK | OK |
| **COMP-9** | 7 | OK | OK | Not OK | OK |
| **COMP-10** | 15 | OK | OK | Not OK | Moderate |
| **COMP-11** | 18 | OK | Not OK | NA | NA |
| **INV-1** | 9 | OK | OK | OK | OK |
| **INV-2** | 9 | OK | OK | OK | OK |
| **INV-3** | 9 | OK | OK | OK | OK |
| **INV-4** | 8 | OK | OK | OK | OK |
| **INV-5** | 9 | OK | OK | OK | OK |
| **INV-6** | 9 | OK | OK | Moderate | OK |
| **INV-7** | 7 | OK | OK | OK | OK |
| **INV-8** | 6 | OK | OK | OK | OK |
| **INV-9** | 6 | OK | OK | OK | OK |
| **INV-10** | 13 | OK | OK | OK | OK |
| **INV-11** | 20 | OK | OK | OK | OK |
| **INV-12** | 14 | OK | OK | OK | OK |
| **INV-13** | 14 | OK | OK | OK | OK |
| **INV-14** | 11 | OK | OK | OK | OK |
| **INV-15** | 10 | OK | OK | OK | OK |
| **INV-16** | 11 | OK | OK | OK | OK |

From Table 11, it should be clear that only the UV curable inkjet inks complying with the requirements of claim 1 exhibited excellent results. By replacing the acrylamide ACMO by other monomers that are equally hydrophilic but are (meth)acrylates, or by ignoring the ranges for the acryl amide, the polyfunctional acrylate and the acid monomer, the UV curable inkjet inks failed on one or more of the requirements for manufacturing conductive patterns.

## Claims

1. A UV curable inkjet ink comprising a polymerizable composition, wherein at least 80 wt% of the polymerizable composition consists of:
a) 15.0 to 70.0 wt% of an acryl amide;
b) 20.0 to 75.0 wt% of a polyfunctional acrylate; and
c) 1.0 to 15.0 wt% of a monofunctional (meth)acrylate containing a carboxylic acid group, a phosphoric acid group or a phosphonic acid group ; with all weight percentages (wt%) based on the total weight of the polymerizable composition, and wherein the viscosity of the UV curable inkjet ink is no more than 20mPa.s at 45°C

2. The UV curable inkjet ink according to claim 1, wherein the acryl amide is a cyclic acryl amide.

3. The UV curable inkjet ink according to claim 2, wherein the cyclic acryl amide is acryloyl morpholine.

4. The UV curable inkjet ink according to any one of claims 1 to 3, wherein at least 1.5 wt% of a (meth)acrylate containing a carboxylic acid group, a phosphoric acid group or a phosphonic acid group is present in the polymerizable composition.

5. The UV curable inkjet ink according to any one of claims 1 to 4, wherein the (meth)acrylate containing a carboxylic acid group, a phosphoric acid group or a phosphonic acid group is selected from the group consisting of 2-carboxyethyl acrylate, 2-acryloyl ethyl succinate, and 2-hydroxyethyl methacrylate phosphate.

6. The UV curable inkjet ink according to any one of claims 1 to 5, wherein the polyfunctional acrylate is selected from the group consisting of: dipropylene glycol diacrylate, neopentylglycol diacrylate , neopentylglycol (2x propoxylated) diacrylate, penta erythritol tetra acrylate, 1,6-hexanediol diacrylate, trimethylolpropane trimethacrylate,ethoxylated tmpta, tripropylene glycol diacrylate, ditrimethyloylpropane tetraacrylate, ethoxylated pentaerythritol tetraacrylate, and polyethyleneglycol diacrylate.

7. The UV curable inkjet ink according to any one of claims 1 to 6, the polymerizable composition consists of one or more acryl amides; one or more polyfunctional acrylates; and one or more (meth)acrylates containing a carboxylic acid group, a phosphoric acid group or a phosphonic acid group

8. The UV curable inkjet ink according to any one of claims 1 to 7, wherein the UV curable inkjet ink contains 0 to 0.05 wt% of surfactant based on the total weight of the UV curable inkjet ink.

9. A method of inkjet printing including the steps of:
a) forming a protected area on a metal surface by printing and curing a UV curable inkjet ink on the metal surface;
b) removing metal from the unprotected area of the metal surface by etching; and
c) removing at least partially the cured UV curable inkjet ink from the protected area of the metal surface;
**characterized in that** the UV curable inkjet ink comprises a polymerizable composition, wherein at least 80 wt% of the polymerizable composition consists of:
a) 15.0 to 70.0 wt% of an acryl amide;
b) 20.0 to 75.0 wt% of a polyfunctional acrylate; and
c) 1.0 to 15.0 wt% of a (meth)acrylate containing a carboxylic acid group, a phosphoric acid group or a phosphonic acid group ; with all weight percentages (wt%) based on the total weight of the polymerizable composition.

10. The method of inkjet printing according to claim 9 wherein the compounds of the polymerizable composition include one or more compounds selected from the group selected from acryloyl morpholine, 2-carboxyethyl acrylate, 2-hydroxyethyl methacrylate phosphate, dipropylene glycol diacrylate, pentaerythritol tetraacrylate neopentylglycol diacrylate , neopentylglycol (2x propoxylated) diacrylate, pentaerythritol tetraacrylate , 1,6-hexanediol diacrylate, trimethylolpropane triacrylate, ethoxylated trimethylolpropane triacrylate, tripropyleneglycoldiacrylate, and 2-(2-vinyloxy-ethoxy)-ethyl acrylate.

11. A method for manufacturing a conductive pattern including the inkjet printing method according to any of claims 9 to 10.

12. A method for manufacturing a decorative etched metal panel including the inkjet printing method according to any of claims 9 to 10.

## Patentansprüche

1. Eine UV-härtbare Tintenstrahltinte, enthaltend eine polymerisierbare Zusammensetzung, wobei mindestens 80 Gew.-% der polymerisierbaren Zusammensetzung besteht aus:
a) 15,0 bis 70,0 Gew.-% eines Acrylamids,
b) 20,0 bis 75,0 Gew.-% eines polyfunktionellen Acrylats, und
c) 1,0 bis 15,0 Gew.-% eines monofunktionellen (Meth)acrylats, enthaltend eine Carbonsäuregruppe, eine Phosphorsäuregruppe oder eine Phosphonsäuregruppe, wobei alle Gewichtsprozentsätze (Gew.-%) bezogen auf das Gesamtgewicht der polymerisierbaren Zusammensetzung ausgedrückt sind, und wobei die Viskosität der UV-härtbaren Tintenstrahltinte bei nicht mehr als 20 mPa.s bei 45°C liegt.

2. Die UV-härtbare Tintenstrahltinte nach Anspruch 1, wobei das Acrylamid ein cyclisches Acrylamid ist.

3. Die UV-härtbare Tintenstrahltinte nach Anspruch 2, wobei das cyclische Acrylamid Acryloylmorpholin ist.

4. Die UV-härtbare Tintenstrahltinte nach einem der Ansprüche 1 bis 3, wobei die polymerisierbare Zusammensetzung mindestens 1,5 Gew.-% eines eine Carbonsäuregruppe, eine Phosphorsäuregruppe oder eine Phosphonsäuregruppe enthaltenden (Meth)acrylats enthält.

5. Die UV-härtbare Tintenstrahltinte nach einem der Ansprüche 1 bis 4, wobei das eine Carbonsäuregruppe, eine Phosphorsäuregruppe oder eine Phosphonsäuregruppe enthaltende (Meth)acrylat aus der Gruppe bestehend aus 2-Carboxyethylacrylat, 2-Acryloylethylsuccinat und 2-Hydroxyethylmethacrylatphosphat ausgewählt wird.

6. Die UV-härtbare Tintenstrahltinte nach einem der Ansprüche 1 bis 5, wobei das polyfunktionelle Acrylat aus der Gruppe bestehend aus Dipropylenglycoldiacrylat, Neopentylglycoldiacrylat, Neopentylglycol-(2x propoxyliertem)-diacrylat, Pentaerythrittetraacrylat, 1,6-Hexandioldiacrylat, Trimethylolpropantrimethacrylat, ethoxyliertem Trimethylolpropantriacrylat, Tripropylenglycoldiacrylat, Ditrimethyloylpropantetraacrylat, ethoxyliertem Pentaerythrittetraacrylat und Polyethylenglycoldiacrylat ausgewählt wird.

7. Die UV-härtbare Tintenstrahltinte nach einem der Ansprüche 1 bis 6, wobei die polymerisierbare Zusammensetzung aus einem oder mehreren Acrylamiden, einem oder mehreren polyfunktionellen Acrylaten und einem oder mehreren, eine Carbonsäuregruppe, eine Phosphorsäuregruppe oder eine Phosphonsäuregruppe enthaltenden (Meth)acrylaten besteht.

8. Die UV-härtbare Tintenstrahltinte nach einem der Ansprüche 1 bis 7, wobei die UV-härtbare Tintenstrahltinte zwischen 0 Gew.-% und 0,05 Gew.-% eines Tensids, bezogen auf das Gesamtgewicht der UV-härtbaren Tintenstrahltinte, enthält.

9. Ein Tintenstrahldruckverfahren, das die folgenden Schritte umfasst:
a) Bilden eines geschützten Bereichs auf einer Metalloberfläche durch Druck und Härtung einer UV-härtbaren Tintenstrahltinte auf der Metalloberfläche,
b) Entfernung von Metall vom nicht-geschützten Bereich der Metalloberfläche durch Ätzen, und
c) mindestens teilweises Entfernen der gehärteten UV-härtbaren Tintenstrahltinte vom geschützten Bereich der Metalloberfläche, **dadurch gekennzeichnet, dass** die UV-härtbare Tintenstrahltinte eine polymerisierbare Zusammensetzung enthält, wobei mindestens 80 Gew.-% der polymerisierbaren Zusammensetzung besteht aus:
a) 15,0 bis 70,0 Gew.-% eines Acrylamids,
b) 20,0 bis 75,0 Gew.-% eines polyfunktionellen Acrylats, und
c) 1,0 bis 15,0 Gew.-% eines (Meth)acrylats, enthaltend eine Carbonsäuregruppe, eine Phosphorsäuregruppe oder eine Phosphonsäuregruppe, wobei alle Gewichtsprozentsätze (Gew.-%) bezogen auf das Gesamtgewicht der polymerisierbaren Zusammensetzung ausgedrückt sind.

10. Das Tintenstrahldruckverfahren nach Anspruch 9, wobei die Verbindungen der polymerisierbaren Zusammensetzung eine oder mehrere Verbindungen aus der Gruppe bestehend aus Acryloylmorpholin, 2-Carboxyethylacrylat, 2-Hydroxyethylmethacrylatphosphat, Dipropylenglycoldiacrylat, Pentaerythrittetraacrylat, Neopentylglycoldiacrylat, Neopentylglycol-(2x propoxyliertem)-diacrylat, Pentaerythrittetraacrylat, 1,6-Hexandioldiacrylat, Trimethylolpropantriacrylat, ethoxyliertem Trimethylolpropantriacrylat, Tripropylenglycoldiacrylat und 2-(2-Vinyloxyethoxy)-ethylacrylat umfassen.

11. Ein Verfahren zur Herstellung eines leitfähigen Musters, umfassend das Tintenstrahldruckverfahren nach einem der Ansprüche 9 bis 10.

12. Ein Verfahren zur Herstellung einer dekorativen geätzten Metallplatte, umfassend das Tintenstrahldruckverfahren nach einem der Ansprüche 9 bis 10.

## Revendications

1. Encre pour impression à jet d'encre durcissable par rayonnement ultraviolet, contenant une composition polymérisable, **caractérisée en ce qu'**au moins 80% en poids de la composition polymérisable est composé de:
a) 15,0 à 70,0% en poids d'un acrylamide,
b) 20,0 à 75,0% en poids d'un acrylate polyfonctionnel, et
c) 1,0 à 15,0% en poids d'un (méth)acrylate monofonctionnel contenant un groupe acide carboxylique, un groupe acide phosphorique ou un groupe acide phosphonique, tous les pourcentages en poids (% en poids) étant exprimés par rapport au poids total de la composition polymérisable, et que la viscosité de l'encre pour impression à jet d'encre durcissable par rayonnement ultraviolet ne dépasse pas 20 mPa.s à 45°C.

2. Encre pour impression à jet d'encre durcissable par rayonnement ultraviolet selon la revendication 1, **caractérisée en ce que** l'acrylamide est un acrylamide cyclique.

3. Encre pour impression à jet d'encre durcissable par rayonnement ultraviolet selon la revendication 2, **caractérisée en ce que** l'acrylamide cyclique est la morpholine d'acryloyle.

4. Encre pour impression à jet d'encre durcissable par rayonnement ultraviolet selon l'une quelconque des revendications 1 à 3, **caractérisée en ce que** la composition polymérisable contient au moins 1,5% en poids d'un (méth)acrylate contenant un groupe acide carboxylique, un groupe acide phosphorique ou un groupe acide phosphonique.

5. Encre pour impression à jet d'encre durcissable par rayonnement ultraviolet selon l'une quelconque des revendications 1 à 4, **caractérisée en ce que** le (méth)acrylate contenant un groupe acide carboxylique, un groupe acide phosphorique ou un groupe acide phosphonique est choisi parmi le groupe composé d'acrylate de 2-carboxyéthyle, de succinate de 2-acryloyléthyle et de phosphate de 2-hydroxyéthylméthacrylate.

6. Encre pour impression à jet d'encre durcissable par rayonnement ultraviolet selon l'une quelconque des revendications 1 à 5, **caractérisée en ce que** l'acrylate polyfonctionnel est choisi parmi le groupe composé de diacrylate de dipropylèneglycol, de diacrylate de néopentylglycol, de diacrylate de néopentylglycol (2x propoxylé), de tétraacrylate de pentaérythritol, de diacrylate de 1,6-hexanediol, de triméthacrylate de triméthylolpropane, de triacrylate de triméthylolpropane éthoxylé, de diacrylate de tripropylèneglycol, de tétraacrylate de ditriméthyloylpropane, de tétraacrylate de pentaérythritol éthoxylé et de diacrylate de polyéthylèneglycol.

7. Encre pour impression à jet d'encre durcissable par rayonnement ultraviolet selon l'une quelconque des revendications 1 à 6, **caractérisée en ce que** la composition polymérisable est composée d'un ou de plusieurs acrylamides, d'un ou de plusieurs acrylates polyfonctionnels et d'un ou de plusieurs (méth)acrylates contenant un groupe acide carboxylique, un groupe acide phosphorique ou un groupe acide phosphonique.

8. Encre pour impression à jet d'encre durcissable par rayonnement ultraviolet selon l'une quelconque des revendications 1 à 7, **caractérisée en ce que** l'encre pour impression à jet d'encre durcissable par rayonnement ultraviolet contient entre 0% en poids et 0,05% en poids d'un tensioactif par rapport au poids total de l'encre pour impression à jet d'encre durcissable par rayonnement ultraviolet.

9. Procédé d'impression à jet d'encre comprenant les étapes consistant à:
a) former une zone protégée sur une surface métallique en imprimant et durcissant une encre pour impression à jet d'encre durcissable par rayonnement ultraviolet sur la surface métallique,
b) éliminer par gravure du métal de la zone non protégée de la surface métallique, et
c) éliminer au moins partiellement l'encre pour impression à jet d'encre durcissable par rayonnement ultraviolet durcie de la zone protégée de la surface métallique,
**caractérisé en ce que** l'encre pour impression à jet d'encre durcissable par rayonnement ultraviolet contient une composition polymérisable, **caractérisé en ce qu'**au moins 80% en poids de la composition polymérisable est composé de:
a) 15,0 à 70,0% en poids d'un acrylamide,
b) 20,0 à 75,0% en poids d'un acrylate polyfonctionnel, et
c) 1,0 à 15,0% en poids d'un (méth)acrylate contenant un groupe acide carboxylique, un groupe acide phosphorique ou un groupe acide phosphonique, tous les pourcentages en poids (% en poids) étant exprimés par rapport au poids total de la composition polymérisable.

10. Procédé d'impression à jet d'encre selon la revendication 9, **caractérisé en ce que** les composés de la composition polymérisable comprennent un ou plusieurs composés choisis parmi le groupe composé de morpholine d'acryloyle, d'acrylate de 2-carboxyéthyle, de phosphate de 2-hydroxyéthylméthacrylate, de diacrylate de dipropylèneglycol, de tétraacrylate de pentaérythritol, de diacrylate de néopentylglycol, de diacrylate de néopentylglycol (2x propoxylé), de tétraacrylate de pentaérythritol, de diacrylate de 1,6-hexanediol, de triacrylate de triméthylolpropane, de triacrylate de triméthylolpropane éthoxylé, de diacrylate de tripropylèneglycol et d'acrylate de 2-(2-vinyloxyéthoxy)-éthyle.

11. Procédé pour la fabrication d'une impression conductrice comprenant le procédé d'impression à jet d'encre selon l'une quelconque des revendications 9 à 10.

12. Procédé pour la fabrication d'un panneau métallique gravé décoratif comprenant le procédé d'impression à jet d'encre selon l'une quelconque des revendications 9 à 10.
